(19) Europäisches Patentamt

European Patent Office

Office européen des brevets

(11) EP 1 000 786 A1

(12) DEMANDE DE BREVET EUROPEEN

(43) Date de publication:
17.05.2000 Bulletin 2000/20

(51) Int. Cl.⁷: B60H 1/00

(21) Numéro de dépôt: 99122385.0

(22) Date de dépôt: 10.11.1999

(84) Etats contractants désignés:
AT BE CH CY DE DK ES FI FR GB GR IE IT LI LU MC NL PT SE
Etats d'extension désignés:
AL LT LV MK RO SI

(30) Priorité: 12.11.1998 FR 9814198

(71) Demandeur: VALEO CLIMATISATION
78321 La Verrière (FR)

(72) Inventeur: Seuge, Olivier
Swansea SAZ 7DJ (GB)

(54) **Appareil de chauffage-climatisation et/ou de climatisation comportant un ou plusieurs volets commandés par un dispositif de commande**

(57) L'invention concerne un appareil de chauffage-ventilation et/ou de climatisation comportant un ou plusieurs volets commandés par un dispositif de commande qui comporte un organe de commande et une chaîne cinématique de commande de type à couplage direct disposée entre l'organe de commande (1) et ledit volet (11), ladite chaîne cinématique comportant un câble gainé fixé au voisinage de ses deux extrémités (4, 7). Il est caractérisé en ce que la chaîne cinématique comporte au moins un élément élastique (27) disposé de manière à conférer à la chaîne cinématique une déformabilité par flexion lorsque ledit volet est en butée. L'invention permet de supprimer le réglage de la commande à distance et l'effet ressort dans la chaîne cinématique.

FIG.2a

EP 1 000 786 A1

## Description

La présente invention a pour objet un appareil de chauffage, de ventilation et/ou de climatisation, notamment pour un véhicule automobile, comportant un ou plusieurs volets commandés par un dispositif de commande.

Actuellement, des commandes à distance par câble gainé d'un ou plusieurs volets sont mises en place sur le boîtier de destination en agrafant la gaine du câble à l'aide d'agrafes qui doivent être judicieusement placées, généralement par des opérateurs expérimentés, de manière que le volet puisse être commandé de manière optimale, c'est-à-dire en assurant une étanchéité sur chacune de ses portées.

Cette opération s'appelle le réglage de la commande à distance. Actuellement, un opérateur est obligé d'assurer ce réglage car, du fait des dispersions dimensionnelles sur les composants de la chaîne de commande, il n'est pas possible d'obtenir un fonctionnement optimal en positionnant la commande à distance toujours à la même place sur le boîtier.

Une mauvaise position de la gaine sur le boîtier peut entraîner ce qu'on appelle de l'effet ressort.

Il se traduit par un inconfort de l'utilisateur qui n'arrive pas à positionner le bouton du tableau de commande en butée. En effet, lorsqu'on tourne le bouton jusqu'en butée, le volet arrive en butée avant le bouton du tableau, et la chaîne cinématique se déforme (flambage du câble, flexion du volet, torsion du levier, ...) créant par là un couple résistant qui, s'il est supérieur au couple de crantage du tableau, (c'est-à-dire le couple de maintien du bouton dans une position ou cran du tableau de commande, et qu'il faut outrepasser pour dégager le bouton du cran et le déplacer), tend à faire sortir le bouton de sa position en butée, d'où l'effet ressort.

Il est certes possible d'éviter cet effet ressort:

- soit en augmentant la course des volets pour une même course du bouton de commande, ce qui élargit la plage de réglage, mais présente l'inconvénient majeur d'augmenter notablement les fuites admissibles;
- soit en augmentant le couple de crantage lorsque le bouton de commande vient en butée, ce qui engendre une mauvaise homogénéité, puisque les efforts sont faibles sauf lorsque le bouton vient en butée, ce qui ne peut être combattu qu'en augmentant les efforts généraux sur le bouton de commande.

La Demande de Brevet Français n° 2 737 864 (BEHR) décrit un volet de fermeture destiné à garantir une étanchéité fiable en position fermée du volet, malgré des écarts de position relativement grands du volet. Le volet présente à cet effet une lèvre d'étanchéité disposée sur le côté extérieur d'une partie du volet qui forme un cadre, et qui est reliée au corps intérieur du volet par l'intermédiaire d'un élément de liaison élastique, les forces de manoeuvre du volet étant transmises au corps intérieur par l'intermédiaire d'un élément de couplage élastiquement déformable.

La Demande de Brevet Français n° 2 679 621 déposée par la Demanderesse propose un dispositif de commande de deux volets actionnés à distance par un même moyen de commande. Afin d'absorber les tolérances éventuelles de fabrication et/ou de montage, qui sont susceptibles d'induire un décalage angulaire non souhaité des volets, tout en assurant une obturation étanche des orifices, le dispositif propose de relier au moins un des volets à son moyen de commande par un accouplement souple, qui est constitué par un manchon en élastomère qui assure une liaison élastique entre l'arbre de commande et l'axe du volet.

Les solutions proposées par les deux antériorités ci-dessus, qui ne sont pas spécifiquement conçues pour supprimer le réglage et éviter l'effet ressort, et qui reviennent à agir sur la plage de réglage du volet, présentent l'inconvénient de générer des battements du volet lors des variations de la pression dynamique, en raison du couplage élastique entre le volet et son arbre de commande.

La Demande de Brevet GB 2 322 181 (ITW ATECO) a pour objet un dispositif d'actionnement dans lequel le bouton de commande n'est pas directement couplé au volet. Au contraire, ce couplage est réalisé de manière indirecte à partir d'un amortisseur rotatif qui comporte un rotor et un pignon logés dans un réceptacle cylindrique rempli d'un liquide d'amortissement tel que de l'huile de silicone, de manière à créer une force de friction donnée qui doit être outrepassée lorsqu'on actionne le pignon. Le problème que ce système vise à résoudre est celui du bruit que produit la fermeture rapide d'un volet, et ce problème est résolu, par la combinaison de l'amortisseur rotatif précité et d'un levier à deux bras. Ce levier à deux bras présente un premier bras constitué par une lame élastique et un deuxième bras constitué par un secteur denté qui entraîne le pignon de l'amortisseur rotatif.

Lors de l'actionnement du dispositif, la lame élastique commence par fléchir en raison du couple d'amortissement de l'amortisseur, jusqu'à ce que celui-ci soit outrepassé, ce qui a pour effet de produire une commande retardée et amortie du volet.

On notera qu'il n'y a pas dans ce système de correspondance biunivoque entre la position du bouton et la position du volet en raison du glissement introduit par l'amortisseur rotatif.

Le fonctionnement de ce dispositif implique un stockage initial d'énergie (au début de l'actionnement) qui est ensuite restituée en fin de course.

Ce processus de stockage et de restitution d'énergie, avec les pertes qui en résultent, notamment dans l'amortisseur rotatif, nécessite une augmentation de l'effort exercé sur le bouton.

**[0015]** Le dispositif décrit dans la Demande de Brevet GB 2 322 181 a également pour inconvénient d'être compliqué, car il implique l'ajout:

- d'une part, d'un levier très souple et à grand débattement qui doit être dimensionné pour stocker et restituer l'énergie requise pour assurer la fermeture du volet en fin de course; et
- d'autre part, d'un amortisseur rotatif.

**[0016]** Aucun des dispositifs analysés ci-dessus n'est donc susceptible de résoudre sans inconvénient notable le problème de l'effet ressort, et de supprimer le réglage de la commande à distance.

**[0017]** L'idée de base de l'invention est de remédier au moins en partie à l'effet ressort en diminuant le couple résistant, pour une déformation donnée du système, par l'introduction d'une élasticité à distance aussi bien du volet pour éviter les inconvénients précités, que du tableau de commande pour éviter d'y introduire une souplesse qui serait alors perçue de la même façon que l'effet ressort que l'on cherche à supprimer. De la sorte, les effets néfastes induits par l'introduction d'une élasticité dans la chaîne cinématique sont masqués par les frottements dans la chaîne cinématique.

**[0018]** Si l'on arrive à obtenir une déformation du système sans générer d'effet ressort sur une distance qui soit supérieure ou égale aux dispersions dimensionnelles sur des composants de la chaîne, alors on peut se permettre de supprimer le réglage en positionnant la commande à distance toujours à la même place sur le boîtier, et notamment en remplaçant l'agrafe par un clip livré sur la commande à distance.

**[0019]** L'invention concerne ainsi un dispositif de commande d'au moins un volet, comportant un organe de commande et une chaîne cinématique de commande du type à couplage direct, disposée entre l'organe de commande et ledit volet, ladite chaîne cinématique comportant notamment un câble gainé fixé au voisinage de ses deux extrémités, caractérisé en ce que la chaîne cinématique comporte au moins un élément élastique disposé de manière à conférer à la chaîne cinématique une déformabilité par flexion lorsqu'un dit volet est en butée.

**[0020]** La chaîne cinématique comporte généralement un premier levier dont le déplacement est commandé par l'organe de commande et qui présente un premier élément récepteur comportant un logement qui reçoit une extrémité amont du câble et/ou un deuxième levier qui présente un deuxième élément récepteur comportant un logement qui reçoit une extrémité aval du câble pour commander le déplacement du deuxième levier, lequel entraîne en rotation ledit volet autour d'un axe de rotation. Au moins un dit levier peut alors présenter un dit moyen élastique.

**[0021]** Selon une première variante, ce moyen élastique est avantageusement un bras élastique, qui est disposé entre un dit élément récepteur et une région centrale du levier. Cette élasticité peut être obtenue soit en modifiant la section du composant sur une certaine distance, soit en surmoulant le composant avec un matériau élastique tel qu'un élastomère.

**[0022]** Selon un mode de réalisation préféré, le dispositif présente deux butées situées de part et d'autre du bras élastique de manière à procurer un effet de butée aux déplacements du bras élastique de part et d'autre de leur position de repos.

**[0023]** Selon une deuxième variante, au moins un dit levier présente deux bras élastiques disposés entre un dit élément récepteur et une région centrale dudit levier. De préférence, la région centrale du levier présente un prolongement disposé entre lesdits deux bras élastiques de manière à procurer un effet de butée au déplacement des bras élastiques du part et d'autre de leur position de repos.

**[0024]** Selon encore un autre mode de réalisation, au moins une extrémité du câble est couplée élastiquement à l'élément récepteur correspondant.

**[0025]** Ladite déformation par flexion telle que perçue au niveau du câble est avantageusement comprise entre 0,15 mm/N et 0,3 mm/N.

**[0026]** D'autres caractéristiques et avantages de l'invention apparaîtront mieux à la lecture de la description qui va suivre, donnée à titre d'exemple non limitatif, en liaison avec les dessins ci-annexés dans lesquels:

- la Figure 1a représente un schéma d'un dispositif de commande d'un volet;
- les Figures 1b à 1d illustrent l'influence des dimensions qui, à cause de leur dispersion, sont à l'origine du réglage de la commande à distance;
- les Figures 2a à 2d représentent des modes de réalisation d'un levier ou secteur de commande de deux volets pour la mise en oeuvre de l'invention;
- les Figures 3a, 3b et 3c, représentent respectivement un accrochage élastique d'un câble sur un levier (Fig. 3a), ainsi qu'un premier (Fig. 3b) et un deuxième (Fig. 3c) modes de réalisation de cet accrochage.

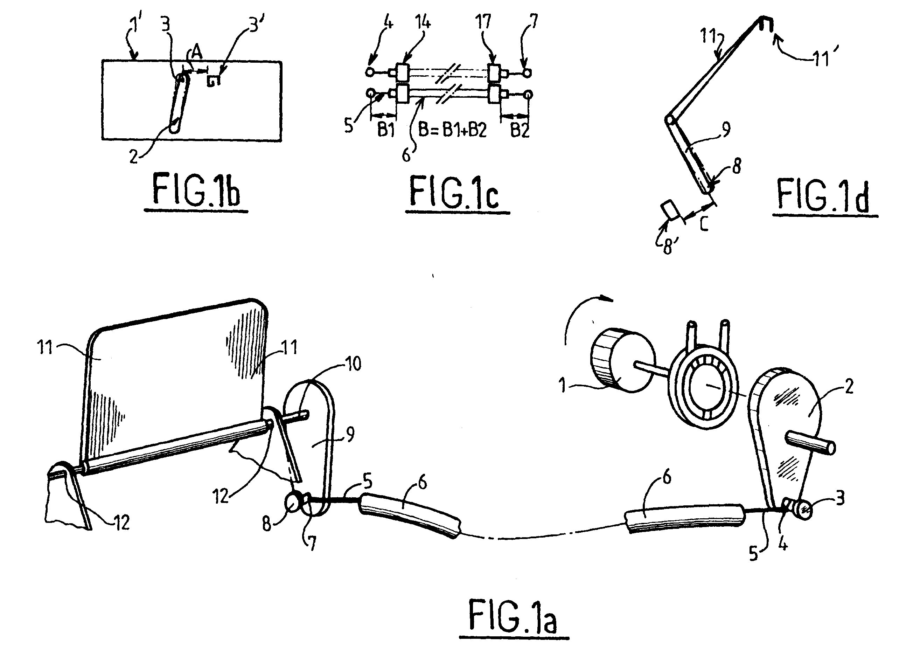

**[0027]** La Figure 1a représente un dispositif de commande d'un volet présentant un bouton de commande 1, et un levier 2 dont la rotation est commandée par le bouton de commande disposé sur un tableau de commande (ou tableau de bord), non représenté, d'un véhicule automobile.

**[0028]** Le levier 2 présente une région 3 d'accrochage d'une extrémité 4 d'un câble 5 présentant une gaine 6 et dont l'autre extrémité 7 est accrochée à une région d'accrochage 8 d'un levier 9 dont la rotation commande celle d'un arbre 10 de commande d'un volet 11, ici de type drapeau, articulé sur des paliers 12.

**[0029]** Le couple à exercer sur le bouton pour déplacer le volet est généralement compris entre 0,1 et 0,4 N.m.

**[0030]** Les Figures 1b à 1d indiquent les dimen-

sions qui influent directement sur le réglage de la commande à distance.

Sur le tableau de commande, on note A la longueur comprise, lorsque le bouton (non représenté) est en butée, entre le centre du logement 3 qui reçoit l'embout 4 et l'extrémité gauche de l'attache de gaine 3' située sur la platine du tableau 1'.

Sur le boîtier (Figure 1d), on note C la longueur, lorsque le volet 11 est en butée sur sa partie 11', entre le centre du logement 8 qui reçoit l'embout 7 et l'extrémité droite de l'attache de gaine 8' située sur le boîtier.

Sur la commande à distance, on note B la longueur constituée par la somme $B_1 + B_2$, $B_1$ étant la longueur entre le centre de l'embout 4 et l'extrémité gauche de l'agrafe 14 et $B_2$ étant la longueur entre le centre de l'embout 7 et l'extrémité droite de l'agrafe 17.

Le réglage de la commande à distance consiste à positionner l'agrafe sur la gaine de telle façon que $B = A + C$.

L'invention consiste à jouer sur la longueur C en lui donnant la possibilité de s'adapter, par déformation, à la longueur B - A. B est alors pris constant (en valeur nominale), ce qui signifie que l'agrafe a toujours la même position sur la gaine et que le réglage est supprimé.

Selon l'invention, pour que la longueur C puisse s'adapter à la longueur B - A, on introduit de la souplesse dans la chaîne cinématique qui va du bouton de commande non compris au volet non compris.

Ceci permet de diminuer le couple résistant et par conséquent de permettre au couple de crantage de lui devenir supérieur.

Cette souplesse ou élasticité est introduite suffisamment loin du ou des volets pour éviter leur battement, dû aux variations de pression dynamique, lequel serait susceptible de générer du bruit et/ou des problèmes d'étanchéité, et suffisamment loin du tableau de commande pour que l'utilisateur ne perçoive pas comme telle la souplesse nouvellement introduite, qui serait alors perçue de la même façon que l'effet ressort que l'on cherche à supprimer.

Du fait que l'élasticité est introduite en dehors du tableau de commande et du ou des volets, son effet est amorti par les frottements dus aux composants d'extrémités (frottements du volet sur son ou ses paliers, frottements du bouton de commande sur son axe, etc.), et à la chaîne cinématique.

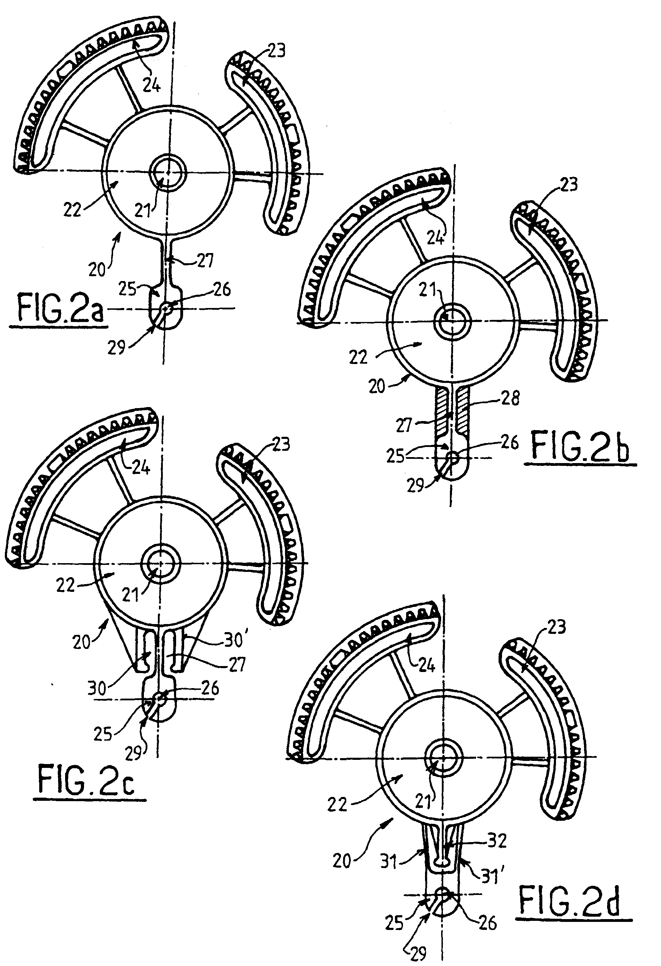

La Figure 2a représente un secteur de distribution 20 en plastique moulé mobile, en rotation autour d'un axe 21 et qui est destiné à commander par l'intermédiaire de deux secteurs à engrenage 23 et 24, le déplacement de deux volets (non représentés).

L'extrémité 7 du câble porte un embout de type tonneau qui est introduit à travers une fente 29 dans un logement 26 d'un doigt de commande 25 qui constitue un élément récepteur et qui est relié à la partie centrale 22 (ou corps) du secteur de distribution 20 par l'intermédiaire d'une lame élastique 27, dont la longueur et l'épaisseur sont choisies de manière à obtenir une souplesse par exemple de l'ordre de 0,15 mm/N à 0,30 mm/N (si on exerce le long du câble une force de 1 N au niveau du logement 26 et perpendiculairement à la lame 27, on aura un déplacement du logement de 0,15 mm à 0,3 mm). Cela permet d'introduire de manière contrôlée de la souplesse dans la chaîne cinématique, pour mettre en flexion la lame élastique 27 en fin de course du bouton de commande avec une force qui peut rester inférieure à la force de crantage. Par contre, dans le reste de la course du bouton de commande, la lame élastique est peu sollicitée par l'effort exercé sur le bouton de commande et sa flexion est sans influence notable sur le fonctionnement.

La Figure 2b représente une variante du dispositif précédent, pour laquelle les mêmes signes de référence désignent les éléments homologues. Dans cette variante, la tenue en fatigue de la lame élastique 27 est améliorée par un surmoulage 28 en un matériau élastique, par exemple un élastomère, qui assure une force de rappel du doigt 25.

La Figure 2c représente une variante du dispositif décrit dans la Figure 2a pour laquelle les mêmes signes de référence désignent les éléments homologues. Dans cette variante, la course latérale du doigt 25 est limitée par le jeu existant entre la lame 27 et la butée 30 d'une part, et la lame 27 et la butée 30' d'autre part. Entre les deux butées 30 et 30', la lame 27 a la même flexion que la lame de la Figure 2a. L'avantage de cette variante réside dans le fait que la lame 27 ne peut fléchir jusque dans un domaine plastique, ce qui aurait comme conséquence que cette lame ne pourrait revenir en position initiale. Le jeu entre la lame 27 et les butées 30 et 30' doit être ainsi dimensionné de sorte qu'il soit supérieur à la somme des dispersions sur les cotes A, B et C de la Figure 1b. On estime à environ ± 3 mm, le déplacement nécessaire pour dépasser les dispersions sur les cotes A, B et C.

Ainsi, en fonctionnement normal, la lame 27 n'arrive jamais sur les butées 30 et 30'.

Dans le cas d'un fonctionnement anormal de la chaîne cinématique qui crée une augmentation du couple de manoeuvre (exemple : bavure dans le boîtier), alors, la lame 27 fléchit jusqu'à venir en butée 30 ou 30'. Ensuite, le système n'est plus souple au niveau du secteur 20 et un autre composant de la chaîne cinématique est sollicité pour passer le point dur. Ainsi, on ne dépasse pas la limite d'élasticité de la lame 27.

La Figure 2d représente une variante de la Figure 2c dans laquelle deux lames élastiques solidaires 31 et 31' remplacent la simple laine 27 de la Figure 2c. Une butée centrale 32 joue le même rôle que les butées 30 et 30' de la Figure 2c. L'avantage de cette variante réside dans le fait que les deux lames élastiques 31 et 31' permettent d'éviter d'éventuels problèmes de vrillage.

Les modes de réalisation des Figures 2a, 2b, 2c et 2d, qui introduisent une élasticité entre le point d'accrochage de l'extrémité 7 du câble 5 et le corps 22, peuvent aussi être appliqués à un levier de commande d'un seul volet, tel que le levier 9 et/ou, en ce qui concerne l'extrémité 4 du câble, et à un levier tel que le levier 2.

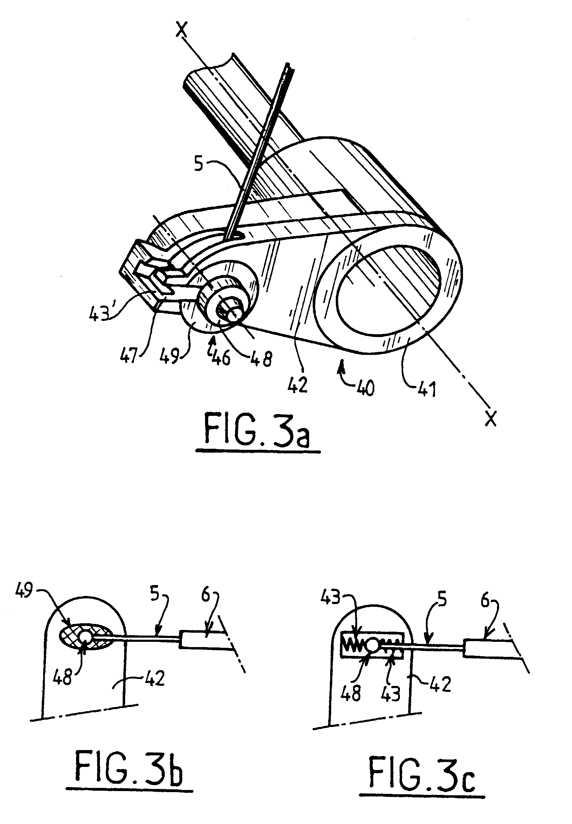

Les Figures 3a à 3c sont relatives à l'introduction d'une élasticité dans la liaison entre une extrémité du câble et son élément récepteur, l'élément introduisant de l'élasticité pouvant être solidaire de l'embout du câble ou bien de l'élément récepteur.

Dans la mode de réalisation de la Figure 3a, un levier 40, qui peut être disposé à proximité du tableau de commande, ou qui peut être un levier d'actionnement d'un volet, présente un corps central cylindrique 41 et un prolongement 42 dont l'extrémité présente une fente 47 destinée à recevoir un embout 48 de type tonneau. Une pièce élastique 49, par exemple en élastomère, elle-même échancrée en 43' dans le prolongement de la fente 47, reçoit l'embout 48 et procure l'effet de souplesse recherché.

Selon la Figure 3b, cette pièce élastique 49 est de forme allongée dans la direction de l'axe du câble 5. Elle se présente par exemple sous la forme d'une ellipse dont l'axe focal est parallèle au câble 5.

Selon la Figure 3c, une élasticité parallèlement à l'axe du câble est introduite par des ressorts 43 et 44.

## Revendications

1. Appareil de chauffage-ventilation et/ou de climatisation comportant un ou plusieurs volets commandés par un dispositif de commande qui comporte un organe de commande et une chaîne cinématique de commande du type à couplage direct disposée entre l'organe de commande (1) et ledit volet (11), ladite chaîne cinématique comportant un câble gainé (5, 6) fixé au voisinage de ses deux extrémités (4, 7), caractérisé en ce que la chaîne cinématique comporte au moins un élément élastique (27, 31, 31', 43, 49) disposé de manière à conférer à la chaîne cinématique une déformabilité élastique lorsqu'un dit volet (11) est en butée.

2. Appareil selon la revendication 1, caractérisé en ce que la chaîne cinématique comporte un premier levier (2) dont le déplacement est commandé par l'organe de commande (1) et qui présente un premier élément récepteur (3) comportant un premier logement qui reçoit une extrémité amont (4) du câble (5, 6).

3. Appareil selon une des revendications 1 ou 2, caractérisé en ce que la chaîne cinématique comporte un deuxième levier (9) qui présente un deuxième élément récepteur (8) comportant un deuxième logement qui reçoit une extrémité aval (7) du câble (5, 6) pour commander le déplacement du deuxième levier (9), lequel entraîne en rotation ledit volet (11).

4. Appareil selon une des revendications 2 et 3, caractérisé en ce qu'au moins un dit levier (2, 9, 20, 40) présente un dit élément élastique (27, 31, 31', 43, 43', 49).

5. Appareil selon la revendication 4, caractérisé en ce que ledit élément élastique est un bras élastique (27) disposé entre un dit élément récepteur (25) et une région centrale (22) du levier (20).

6. Appareil selon la revendication 5, caractérisé en ce que le bras élastique (27) est entouré d'un surmoulage (28) en un matériau élastique tel qu'un élastomère.

7. Appareil selon la revendication 5, caractérisé en ce qu'il présente deux butées (30, 30') situées de part et d'autre du bras élastique (27), de manière à procurer un effet de butée aux déplacements du bras élastique (27).

8. Appareil selon une des revendications 2 ou 3, caractérisé en ce qu'au moins un dit levier présente deux bras élastiques (31, 31') disposés entre un dit élément récepteur (25) et une région centrale (22) dudit levier (20).

9. Appareil selon la revendication 8, caractérisé en ce que la région centrale (22) du levier (20) présente un prolongement (32) disposé entre lesdits deux bras élastiques (31, 31'), de manière à procurer un effet en butée aux déplacements desdits deux bras élastiques (31, 31') de part et d'autre de leur position de repos.

10. Appareil selon une des revendications 2 à 4, caractérisé en ce qu'au moins une extrémité du câble est couplée élastiquement (43, 43', 49) à l'élément récepteur correspondant.

11. Appareil selon une des revendications précédentes, caractérisé en ce que ladite déformabilité par flexion, vue du câble, est comprise entre 0,15 mm/N et 0,3 mm/N.

FIG.1d

FIG.1c

FIG.1b

FIG.1a

$B = B1 + B2$

FIG.2a

FIG.2b

FIG.2c

FIG.2d

FIG.3a

FIG.3b

FIG.3c

EP 1 000 786 A1

| | Office européen des brevets | RAPPORT DE RECHERCHE EUROPEENNE | Numéro de la demande EP 99 12 2385 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 151 172 A (FERODO SA) 13 avril 1973 (1973-04-13) * le document en entier * | 1-3,10 | B60H1/00 |
| Y | | 4,5 | |
| D,Y | GB 2 322 181 A (ITW ATECO GMBH) 19 août 1998 (1998-08-19) * page 3, ligne 25 - page 4, ligne 20; figure 1 * | 4,5 | |

DOMAINES TECHNIQUES RECHERCHES (Int.Cl.7)

B60H

Le présent rapport a été établi pour toutes les revendications

| Lieu de la recherche | Date d'achèvement de la recherche | Examinateur |
|---|---|---|
| LA HAYE | 15 février 2000 | Smeyers, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

9

**ANNEXE AU RAPPORT DE RECHERCHE EUROPEENNE
RELATIF A LA DEMANDE DE BREVET EUROPEEN NO.**

EP 99 12 2385

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-02-2000

| Document brevet cité<br>au rapport de recherche | Date de<br>publication | Membre(s) de la<br>famille de brevet(s) | Date de<br>publication |
|---|---|---|---|
| FR 2151172 A | 13-04-1973 | AUCUN | |
| GB 2322181 A | 19-08-1998 | DE 29700940 U | 20-05-1998 |

EPO FORM P0459